# EUROPEAN PATENT APPLICATION

(11) **EP 0 672 510 A1**
(43) Date of publication of application: **20.09.1995**
(21) Application number: 94110666.8
(22) Date of filing: 08.07.1994
(51) Int. Cl.: B29C 44/04, B29C 41/18

(54) **Formed article of resin and method of production thereof**

(30) Priority: 16.03.1994 JP 70198/94
(71) Applicant: NAKATA COATING CO., LTD., Yokohama-shi, Kanagawa (JP)
(72) Inventor: Matsuno, Takemi, c/o Nakata Coating Co., Ltd., Yokohama-shi, Kanagawa (JP)
(74) Representative: Blumbach, Kramer & Partner

(57) **Abstract**

A formed article of resin which exhibits high thermal fluidity optimum for powder slush molding and precludes the emission of a harmful substance in the process of combustion is disclosed.

The formed article of resin is produced by powder slush molding a polyolefin or flame-retardant polyolefin resin material (6) as the raw material. A formed article resin of a two-layer construction (6,7) is produced by integrating the formed article of resin mentioned above with a foamed layer (7) obtained by adding a foaming agent to a polyolefin or flame-retardant polyolefin resin material. The integration is accomplished by the powder slush molding.

## Description

### BACKGROUND OF THE INVENTION

### Field of the Invention:

This invention relates to a formed article of resin for use in the fabrication of automobile interior parts and a method for the production of the formed article of resin. This invention relates, more particularly, to a formed article of resin obtained by the powder slush molding and used for the fabrication of automobile interior parts and a method for the production of the formed article of resin.

### Description of the Prior Art:

The skin layers of console boxes and door trims, for example, among the automobile interior parts are manufactured by the powder slush molding. Heretofore, the use of polyvinyl chloride resin as the raw material for these coats has been predominantly in vogue by reason of ideal processability (thermal fluidity).

For the purpose of imparting elasticity to these skin layers as automobile interior parts and, at the same time, enabling the skin layers in conjunction with their substrates to retain shape intact and acquire toughness, such integrally formed articles obtained by molding polyurethane foam fast on the inner surfaces (reverse surfaces) of the skin layers are used.

The skin layers and the integrally formed articles mentioned above are manufactured by powder slush molding, extrusion molding, etc.

Automobile seats also rely preponderantly on polyvinyl chloride resin as their raw material. These seats are produced by combining sin layers obtained by the extrusion molding with polyurethane foam.

### SUMMARY OF THE INVENTION

The polyvinyl chloride resin is a material which is inexpensive and excellent in physical properties. When it is adopted as the raw material for automobile interior parts, the produced interior parts are integrally formed articles which always have added thereto polyurethane foam through the medium of an insert no matter whether they consist solely of a coat or they consist of a double-layer construction including a foam layer.

When an automobile is to be scrapped after it has overworked the service life thereof or it has been involved in an accident, it is stripped of the component parts and the removed component parts are sorted for the purpose of recycling. The automobile interior parts whose skin layers are integrally formed articles using urethane are not easily scrapped and sorted for recycling. Thus, they are inevitably disposed of by incineration as useless debris.

Further, they are not allowed today to be disposed of by incineration because polyvinyl chloride and polyurethane both emit a large volume of smoke containing a harmful gas in the process of incineration and entail an environmental pollution.

When automobile interior parts are formed with the raw material mentioned above, only the skin layers thereof can be formed by powder molding. Various techniques have been proposed concerning the powder molding. Among them is counted the invention of Japanese Patent Application No. 355,425/1992, for example. The forming equipment is basically constructed of a reservoir tank which is a box-shaped vessel storing powdered resin and a slush mold having a cavity.

When the slush mold in a heated state and the reservoir tank filled with powdered resin are integrally connected to each other with the slush mold disposed on the upper side and they are reversed, the powdered resin is caused to adhere to the shaping cavity of the slush mold. The resin deposited fast on the slush mold is melted with the heat of the forming surface. When the slush mold and the reserve tank still in the connected state are again reversed after the elapse of a fixed length of time, the part of the powdered resin which is still in an unmelted state is received and stored inside the reservoir tank. The slush mold is removed from the reservoir tank and cooled. Then, a resin film consequently formed on the shaping cavity is removed to obtain the formed article aimed at.

The skin layer is produced in consequence of the forming process described above. The production of a formed article of two-layer construction which comprises the skin layer and a foamed layer made of a material different from the material of the skin layer necessitates a separate work of integrally depositing a foamed layer on the inner surface (reverse surface) of the skin layer which has been obtained by the powder slush molding. It, therefore, entails an addition to the number of steps of process, renders the work of production complicated, and boosts the cost of production. These operations are mostly carried out by a person different from the person engaging in the operation of powder slush molding.

This invention, in the light of various drawbacks suffered by the raw material, method, etc. to be used for the fabrication of the conventional automobile interior parts as described above, has for an object thereof the provision of a formed article of resin which, owing to the adoption of a polyolefin or flame-retardant polyolefin as the raw material therefor, exhibits fluidity optimum for powder molding and avoids emission of a harmful substance in the process of combustion.

This invention also provides a formed article of resin which possesses a flame-retarding property.

Further, this invention provides a method which is capable of producing a formed article constructed of two layers using different resinous material by the powder slush molding.

### BRIEF DESCRIPTION OF THE DRAWINGS

The invention will be better understood and the objects and features thereof other than those set forth above will become apparent when consideration is given to the following detailed description, which makes reference to the annexed drawings, wherein:
Fig. 1 is a diagram illustrating the steps of a process for the formation of a skin layer by the powder slush molding.
Fig. 2 is a diagram illustrating the steps of a process for the formation of a coat and a foamed layer by the powder slush molding.
Fig. 3 is a cross section of the essential part of a formed article of a two-layer construction produced by the powder slush molding.

### DETAILED DESCRIPTION OF THE PREFERRED EMBODIMENTS

To accomplish the objects described above, this invention produces a formed article of resin with a polyolefin or flame-retardant polyolefin resin material by the powder slush molding.

The formed article of resin according to this invention comprises a skin layer formed of a polyolefin or flame-retardant polyolefin resin material by the powder slush molding and a foamed layer produced by addition of a foaming agent to a polyolefin or a flame-retardant polyolefin resin material.

The polyolefin or flame-retardant polyolefin resin material to be used in this invention is a resin mixture consisting of an ethylene copolymer, an extremely low density polyethylene, and a synthetic rubber and having a melt index in the range of 0.5 to 150. Further, the flame-retardant polyolefin resin material is a non-halogen flame-retardant composition having incorporated in a resin mixture not more than 15% by weight of an inorganic flame-retardant agent consisting of magnesium hydroxide, a red phosphorus chemical compound, and zinc borate, the resin mixture comprising an ethylene copolymer, an extremely low density polyolefin, and a synthetic rubber and having a melt index in the range of 0.5 to 150.

The method for production of a formed article of a two-layer construction is characterized by the steps of forming on the cavity of a slush mold a skin layer 5 of a polyolefin or flame-retardant polyolefin resin material by the powder slush molding, depositing fast on the reverse of the skin layer 5 a foamed layer 6 of a powdered resin mixing a foaming agent incorporated in a polyolefin or flame-retardant polyolefin resin material by the powder slush molding, and subjecting the resultant composite to a heating and a cooling process.

Now, this invention will be described in detail below.

The formed article of resin obtained by this invention is produced with a polyolefin or flame-retardant polyolefin as the raw material by the powder slush molding.

In the polyolefin resin composition which is to be used as the raw material, the ethylene copolymer is a resin mixture A which comprises 100 parts by weight of an ethylene-vinyl acetate copolymer (A) having a melt index in the range of 50 to 150 and a vinyl acetate content in the range of 4 to 10% by weight, 30 to 90 parts by weight of an ethylene-vinyl acetate copolymer (B) having a melt index in the range of 1 to 3 and a vinyl acetate content in the range of 15 to 30% by weight, 0 to 30 parts by weight of an extremely low density polyolefin having a melt index in the range of 5 to 10, and 10 to 60 parts by weight of a synthetic rubber.

Then the flame-retardant polyolefin resin composition which is to be used as the raw material is a resin mixture B which comprises 100 parts by weight of the resin mixture A mentioned above, 1 to 5 parts by weight of magnesium hydroxide, 3 to 8 parts by weight of magnesium hydroxide, 3 to 8 parts by weight of red phosphorus, and 1 to 4 parts by weight of zinc borate. It is used in a ratio of not more than 15 parts by weight, based on the amount of the resin mixture A.

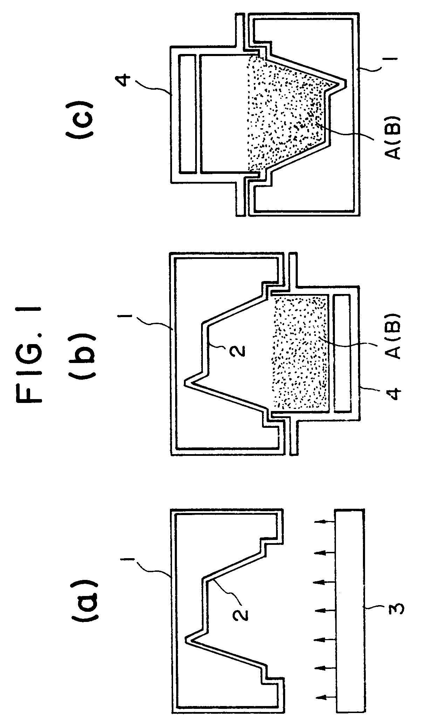

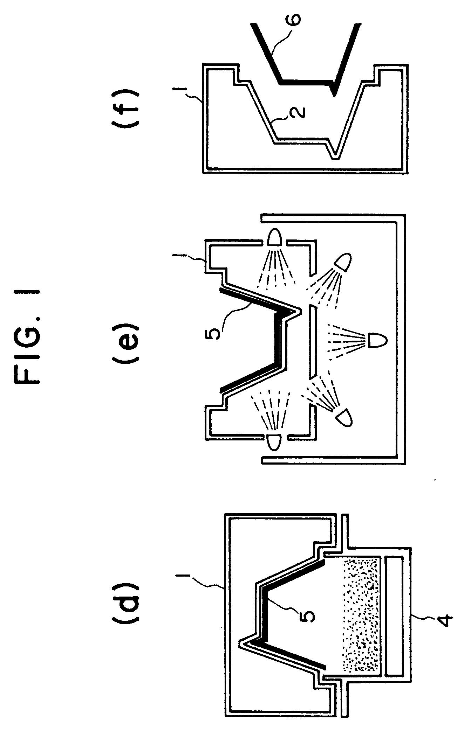

The skin layer having a prescribed thickness is produced with the resin composition A or B mentioned above by the powder slush molding. Any of the conventional forming means may be adopted for effecting the powder slush molding operation. Fig. 1 represents the case of adopting the conventional powder slush molding apparatus. As illustrated in Fig. 1 (a), a cavity 2 of a slush mold 1 is suitably heated with a heating device 3. The heated slush mold 1 and a reservoir tank 4 storing the powdered resin of the aforementioned resin composition A or B are connected in such a manner that the cavity 2 may face downwardly (Fig. 1b). Then, the slush mold 1 and the tank 4 are reversed in the vertical direction (Fig. 1c).

As a result, the powdered resin A or B stored in the tank 4 falls down on the cavity 2. When the slush mold 1 and the tank 4 are reversed after the elapse of a prescribed length of time, the powdered resin A or B on the cavity 2 is melted to the surface of the cavity 2 by the heat of the cavity 2 and consequently allowed to form a resin film 5 of a prescribed thickness. The part of the powdered resin A or B which has escaped this melt on the cavity 2 is received and stored inside the tank 4. Then, the tank 4 is removed from the slush mold 1 and the slush mold 1 is cooled (Fig. 1e). A skin layer 6 as a formed article is obtained by peeling from the cavity 2 the resin film 5 of the prescribed thickness which is formed of the resin A or B (Fig. 1f).

The formed skin layer 6 of the polyolefin or flame-retardant polyolefin type resin which has been produced as described above acquired the shape of an automobile interior part from the cavity 2 and can be used in its unaltered form as an interior part. The thickness of the skin layer 6 can be adjusted by the temperature of the heated cavity 2 and the duration of contact of the cavity 2 with the powdered resin as the raw material. Generally, this thickness is in the range of 0.5 mm to 1.4 mm.

A foaming resin composition A' or B' is prepared by adding a foaming agent to the resin composition A or B mentioned above. By depositing a foamed layer of the foaming resin composition A' or B' by the powder slush molding on the inner surface (reverse surface) of the skin layer 6 obtained as described above, the formed article of a two-layer construction consisting of the skin layer 6 and the foamed layer can be continuously and integrally produced.

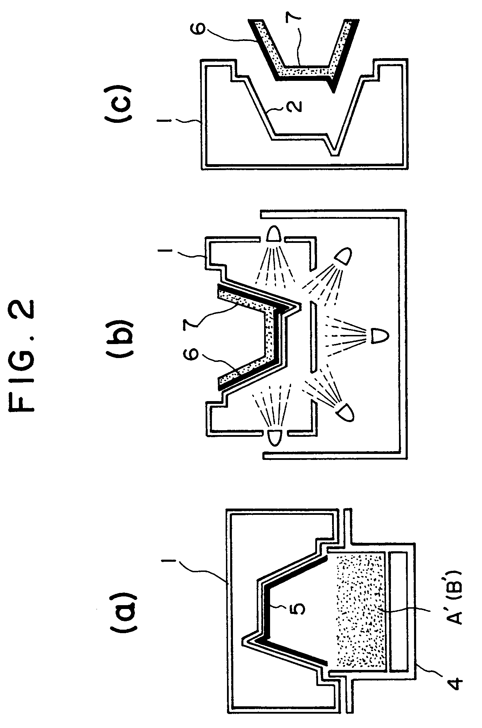

Now, the method for producing the formed article of the two-layer construction by the powder slush molding will be described below with reference to Fig. 2. In this diagram, like parts found in the previous diagram are denoted by like reference numerals.

The steps of the process for formation of the skin layer 6 in the present method are equal to those of the method illustrated in Fig. 1. In the present method, while the resin film 5 destined to form the skin layer 6 is adhering in the melted state to the forming surface 2 at the step of Fig. 1 (d) during the process mentioned above, the tank 4 storing the resin composition A or B is removed and the tank 4 storing the foaming resin composition A' or B' in the powdered form is connected to the lower side of the slush mold 1 (Fig. 2a) and, in the same manner as in the formation of the skin layer 6 illustrated in Fig. 1 (c), the tank 4 and the slush mold 2 joined to each other are reversed in the vertical direction. In consequence of the reversion, the foaming resin composition A' or B' falls from the tank 4 onto the cavity 2 side inside the slush mold 1, lands on and adheres to the surface of the resin film 5 which is in a heated state, and begins to melt.

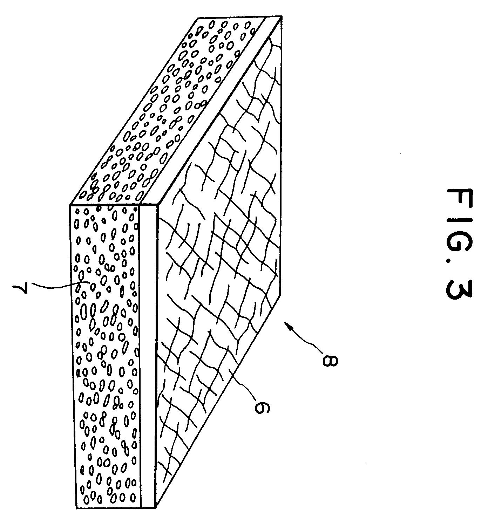

After all the steps mentioned above are completed, the tank 4 and the slush mold 1 are again reversed, the tank 4 is removed from the slush mold 1, and the slush mold 1 is cooled. As a result, a resin film 7 which is formed of the foaming resin A' or B' deposited in a prescribed thickness on the inner surface of the resin film 5 is cooled in conjunction with the resin film 5. When the two-layer construction produced by the integration of the resin films 5 and 7 is peeled from the cavity 2 as illustrated in Fig. 2c, a formed article of a two-layer construction which is formed of a skin layer 6 and a foamed layer 8 resulting from the cooling of the resin film 7 as illustrated in Fig. 3 is obtained.

The thickness of the foamed layer 8 is generally in the range of 2 mm to 15 mm. The integration of this foamed layer with the skin layer 6 allows the produced interior part to retain the appearance and shape thereof stably as a whole.

Now, concrete examples of the skin layer 5 and the foamed layer 6 and the physical properties of the formed articles consequently obtained will be described below.

### Example 1: Layer of skin of polyolefin

| | Raw materials | Weight (%) |
|---|---|---|
| 1. | Extremely low density polyethylene | 10 |
| 2. | Ethylene-vinyl acetate copolymer (A) | 37.2 |
| 3. | Ethylene-vinyl acetate copolymer (B) | 30 |
| 4. | Synthetic rubber | 20 |
| 5. | Antioxidant | 0.3 |
| 6. | Pigment | 1 |
| 7. | Lubricant | 1.5 |

The composition obtained by mixing the raw materials mentioned above was found to have a melt index of 28. A skin layer 6 obtained by pulverizing the composition and powder slush molding the resultant powdered composition in a prescribed thickness was found to have the following physical properties.

| Item of test | Testing method | Unit | Property |
|---|---|---|---|
| Density | JIS* K-6760 | g/cm³ | 0.956 |
| Tensile strength at break | JIS K-6760 | Kg/cm² | 160 |
| Tensile elongation at break | JIS K-6760 | % | 600 |
| Formability (ratio of primary shrinkage) | - | - | Not more 7/1000 |
| Tear strength | JIS K-6301 | N/mm | 41.8 |

| | | | |
|---|---|---|---|
| * Japanese Industrial Standard | | | |

### Example 2: Foamed layer of polyolefin

| | Raw materials | Weight(%) |
|---|---|---|
| 1. | Ethylene-vinyl acetate copolymer (A) | 50 |
| 2. | Ethylene-vinyl acetate copolymer (B) | 38.2 |
| 3. | Antioxidant | 0.3 |
| 4. | Foaming agent | 3 |
| 5. | Cross-linking agent | 0.8 |
| 6. | Foaming stabilizer | 6.7 |
| 7. | Pigment | 1 |

The composition obtained by mixing the raw materials mentioned above was found to have a melt index of 82. A foamed layer 8 obtained by pulverizing the composition and powder slush molding the resultant powdered composition in a prescribed thickness was found to have the following physical properties. The thickness of the foamed layer 8 was 7.5 mm.

| Item of test | Testing method | Unit | Property |
|---|---|---|---|
| Density (before foaming) | JIS K-6760 | g/cm³ | 0.943 |
| Hardness (Aska C) | Automobile Standards | - | 48 |
| Tear strength | Automobile Standard | N/cm | 11.4 |
| Expansion ratio | S.P./volume method | - | 3.5 |

### Example 3: Layer of skin of flame-retardant polyolefin

| | Raw materials | Weight (%) |
|---|---|---|
| 1. | Extremely low density polyethylene | 8 |
| 2. | Ethylene-vinyl acetate copolymer (A) | 35 |
| 3. | Ethylene-vinyl acetate copolymer (B) | 18.2 |
| 4. | Synthetic rubber | 20 |
| 5. | Magnesium hydroxide | 3 |
| 6. | Red phosphorus compound | 5 |
| 7. | Zinc borate | 1 |
| 8. | Carbon pigment | 8 |
| 9. | UV agent | 0.1 |
| 10. | Antioxidant | 0.2 |
| 11. | Lubricant | 1.5 |

The composition obtained by mixing the raw materials mentioned above was found to have a melt index of 24. A skin layer 6 obtained by pulverizing the composition and powder slush molding the resultant powdered composition in a prescribed thickness was found to have the following physical properties.

| Item of test | Testing method | Unit | Property |
|---|---|---|---|
| Density | JIS K-6760 | g/cm³ | 0.988 |
| Tensile strength at break | JIS K-6760 | Kg/cm² | 135 |
| Tensile elongation at break | JIS K-6760 | % | 600 |
| Tear strength | JIS K-6301 | N/mm (kg/mm) | 41.5 (4.23) |
| Inflammability | MVSS (JIS K-6911) | | Less than 3 (self-extinction) |

### Example 4: Foamed layer of flame-retardant polyolefin

| | Raw materials | Weight (%) |
|---|---|---|
| 1. | Ethylene-vinyl acetate copolymer (A) | 50 |
| 2. | Ethylene-vinyl acetate copolymer (B) | 34.6 |
| 3. | Magnesium hydroxide | 2 |
| 4. | Red phosphorus compound | 4 |
| 5. | Foaming stabilizer | 5 |
| 6. | Antioxidant | 0.3 |
| 7. | Foaming agent | 3 |
| 8. | Cross-linking agent | 0.6 |
| 9. | Pigment | 0.5 |

The composition obtained by mixing the raw materials mentioned above was found to have a melt index of 80. A foamed layer 8 obtained by pulverizing the composition and powder slush molding the resultant powdered composition in a prescribed thickness was found to have the following physical properties. The thickness of the foamed layer 8 was found to be 7.5 mm.

| Item of test | Testing method | Unit | Property |
|---|---|---|---|
| Density (before foaming) | JIS K-6760 | g/cm³ | 0.993 |
| Hardness (Aska C) | Automobile Standard | - | 52 |
| Tear strength | Automobile Standard | N/cm | 12.3 |
| Expansion ratio by foaming | SP/volume | - | 3.7 |
| Inflammability | MVSS (JIS K-6911) | Cm/min. | Less than 3 (self-extinction) |

The formed articles of resin compositions comprising a polyolefin or flame-retardant polyolefin according to the present invention described above enjoy such peculiar effects as (1) containing no harmful substance, (2) permitting recycling, (3) allowing simplification of automobile interior parts in construction and retention of appearance and shape notwithstanding the absence of such backing materials as urethane foam, and (4) warranting high economy from the point of view of cost.

The method for production of a formed article according to this invention permits continuous production of integrally formed articles of a two-layer construction by the powder slush molding. Thus, it lends itself to enhancing the operational efficiency of the production of formed articles of two-layer construction.

While there have been shown and described present preferred embodiments of the invention, it is to be distinctly understood that the invention is not limited thereto but may be otherwise variously embodied and practiced within the scope of the following claims.

## Claims

1. A formed article of resin characterized by being produced by powder slush molding a polyolefin or flame-retardant polyolefin resin material.

2. A foamed article of resin of a two-layer construction characterized by being produced by integrating a skin layer made of a polyolefin or flame-retardant polyolefin resin material with a foamed layer composed of a polyolefin or flame-retardant polyolefin resin material and a foaming agent mixed to said resin material by the powder slush molding.

3. A foamed article of resin according to claim 1 or claim 2, wherein said polyolefin or flame-retardant polyolefin resin material is a resin mixture comprising an ethylene copolymer, an extremely low density polyolefin, and a synthetic rubber and having a melt index in the range of 0.5 to 150.

4. A formed article of resin according to claim 1 or claim 2, wherein said flame-retardant polyolefin resin material is a non-halogen flame-retardant composition having incorporated in a resin mixture not more than 15% by weight of an inorganic flame-retardant agent consisting of magnesium hydroxide, a red phosphorus chemical compound, and zinc borate, said resin mixture comprising an ethylene copolymer, an extremely low density polyolefin, and a synthetic rubber and having a melt index in the range of 0.5 to 150.

5. A method for the production of a formed article of resin of a two-layer construction characterized by the steps of forming on the cavity of a slush mold a skin layer of a polyolefin or flame-retardant polyolefin resin material by the powder slush molding, depositing fast on the reverse of said skin layer a foamed layer of a powdered resin having a foaming agent incorporated in a polyolefin or flame-retardant polyolefin resin material by the powder slush molding, and subjecting the resultant composite to a heating and a cooling process.
